# EUROPÄISCHE PATENTSCHRIFT

(11) **EP 3 826 866 B1**
(45) Veröffentlichungstag und Bekanntmachung des Hinweises auf die Patenterteilung: **20.04.2022**
(21) Anmeldenummer: 19719528.2
(22) Anmeldetag: 29.04.2019
(51) Int. Cl.: B60J 1/02, B32B 17/10

(54) **FAHRZEUGSCHEIBENEINHEIT MIT KRÜMMUNGSABHÄNGIGER EINFÄRBUNG**
VEHICLE WINDOW UNIT WITH CURVATURE-DEPENDENT TINTING
UNITÉ DE VITRE DE VÉHICULE À TEINTE DÉPENDANTE DES CURVATURES

(30) Priorität: 26.07.2018 EP 18185740
(43) Veröffentlichungstag der Anmeldung: 02.06.2021
(73) Patentinhaber: Saint-Gobain Glass France, 92400 Courbevoie (FR)
(72) Erfinder: ARNDT, Martin, 52066 Aachen (DE); KRONHARDT, Heinrich, 52372 Kreuzau (DE)
(74) Vertreter: Feist, Florian Arno
(86) Internationale Anmeldenummer: PCT/EP2019/060842
(87) Internationale Veröffentlichungsnummer: WO 2020/020498

(56) Entgegenhaltungen:
- EP-A1- 1 575 120
- GB-A- 993 943
- US-A- 3 293 343
- US-B2- 6 866 918
- Roentgen: "Double vision (ghosting) at night through windshield? | Page 16 | Tesla Motors Club", , 25. Juni 2016 (2016-06-25), XP055515168, Gefunden im Internet: URL:https://teslamotorsclub.com/tmc/thread s/double-vision-ghosting-at-night-through- windshield.60997/page-16#post-1601152 [gefunden am 2018-10-15]

## Beschreibung

Die Erfindung betrifft eine Fahrzeugscheibeneinheit nach dem Oberbegriff des Anspruchs 1, wie sie insbesondere als Windschutzscheibe oder Heckscheibe eines PKW oder auch als Glasdacheinheit eines PKW gefertigt wird. Die Anwendung der Erfindung ist jedoch nicht auf die Automobilindustrie begrenzt, sondern sie kann auch bei Wasserfahrzeugen und Flugzeugen, insbesondere bei Kleinflugzeugen, eingesetzt werden.

Fahrzeugscheibeneinheiten dieser Art sind seit Langem bekannt und werden in der Serienproduktion von PKWs, aber auch von Bussen und anderen Fahrzeugen, seit Jahrzehnten massenhaft eingesetzt. Es ist auch bekannt, an der Oberkante von Windschutzscheibeneinheiten für PKWs (und gelegentlich auch bei anderen Fahrzeugen) eine teiltransparente Einfärbung oder Tönung vorzusehen, die in diesem Bereich das Transmissionsvermögen der Scheiben herabsetzt, um Blendungen des Fahrers und Beifahrers durch direktes Sonnenlicht zu reduzieren.

Im Zuge der Entwicklung des PKW-Designs hin zu "runderen", organischeren Formen gibt es seit Jahren einen Trend hin zu Fahrzeugscheibeneinheiten, deren seitliche Krümmungsbereiche einen sehr geringen Krümmungsradius und/oder ausgeprägte Gradienten des Krümmungsradius haben. Dieser Trend besteht vor allem bei Windschutzscheibeneinheiten, wo durch Verlängerung der Windschutzscheibe in den klassischen Dach- und/oder Seitenbereich des Fahrzeugs ein panoramaartiger Sichteindruck für die Fahrzeuginsassen erzeugt werden kann. Der Trend hat inzwischen aber auch das Design von Heckscheibeneinheiten und Glasdächern, hier bezogen auf die den Dach-Querholmen benachbarten kurzen Seitenkanten des Glasdachs, erreicht.

Vor allem bei Windschutzscheiben, unter bestimmten Bedingungen aber auch bei Heckscheiben und Glasdächern, kann der unerwünschte Effekt der Ausbildung von sogenannten "Doppelbildern" auftreten. Er beruht darauf, dass durch die Scheibe hindurchtretendes Licht an den Glasoberflächen teilweise reflektiert wird. Neben dem Hauptbild, welches durch direkt durch die Scheibe hindurchtretendes Licht hervorgerufen wird, kann durch Mehrfachreflexion an der inneren und äußeren Scheibenoberfläche ein weiteres, intensitätsschwächeres und leicht versetztes Bild erzeugt werden. Der Effekt ist besonders nachts ausgeprägt und kann beispielsweise dazu führen, dass die Scheinwerfer eines entgegenkommenden Fahrzeugs doppelt wahrgenommen werden. Der störende Effekt ist in Bereichen starker Krümmungen der Scheibe oder ausgeprägter Gradienten des Krümmungsradius besonders ausgeprägt. Zwar sind Doppelbilder - da bei gekrümmten Gläsern unvermeidlich - in gewissen Grenzen nach den einschlägigen ECE-Normen (ECE R43) zulässig, ihre weitgehende Vermeidung ist dennoch wünschenswert und stellt ein Entwicklungsziel dar.

In diesen Bereich können neben den Doppelbildern auch optische Verzerrungen auftreten, welche die Wahrnehmung des Fahrers (und auch der übrigen Fahrgäste) stören, da die Umgebung des Fahrzeugs verzerrt wahrgenommen wird. Speziell beim Fahrer stellen sie sogar ein Sicherheitsrisiko dar, weil er aufgrund der verzerrten Wahrnehmung der Gefahr ausgesetzt ist, in bestimmten Verkehrssituationen falsch zu reagieren bzw. fahrtechnische Fehler zu begehen.

US3293343A offenbart eine Fahrzeugscheibeneinheit mit seitlichen Krümmungsbereichen, welche eingefärbt sind, wobei sich der Grad der Einfärbung ortsabhängig ändert.

Der Erfindung liegt daher die Aufgabe zu Grunde, eine Fahrzeugscheibeneinheit bereitzustellen, die auch bei stark gekrümmten Seitenbereichen Doppelbilder und optische Verzerrungen in der Wahrnehmung der Fahrzeuginsassen weitgehend unterdrückt.

Diese Aufgabe wird durch eine Fahrzeugscheibeneinheit mit den Merkmalen des Anspruchs 1 gelöst. Zweckmäßige Fortbildungen des Erfindungsgedankens sind Gegenstand der abhängigen Ansprüche.

Die erfindungsgemäße Fahrzeugscheibeneinheit umfasst seitliche Krümmungsbereiche, die im montierten Zustand nahe einer, insbesondere aufstehenden, Säule der Fahrzeugkarosserie angeordnet sind. Diese Krümmungsbereiche sind erfindungsgemäß mindestens teilweise transmissionsmindernd eingefärbt.

Die erfindungsgemäße Einfärbung ist derart angeordnet und ausgeführt, dass Doppelbilder im Bereich kleiner Krümmungsradien und/oder großer Gradienten des Krümmungsradius weitestgehend unterdrückt werden. Die Herabsetzung der Gesamttransmission wirkt sich insbesondere auf das intensitätsschwächere Doppelbild aus, welches folglich nicht mehr oder nur mit weiter verringerter Intensität wahrgenommen wird. Mit einer solchen Einfärbung ergeben sich für den Fahrer bzw. Insassen auch deutliche Verbesserungen bei der Wahrnehmung von Bildinhalten, die durch die starke Krümmung bzw. den großen Krümmungsgradienten erheblich verzerrt sein können.

Im Sinne der Erfindung wird unter dem Wort "eingefärbt" nicht eine Farbgebung im engeren Sinne (also etwa Grün oder Blau), sondern allgemein eine Reduzierung des Transmissionsvermögens, also etwa durch eine Grau-Färbung, und oder sich verändernde, übergehende Einfärbungen von keiner Transmission auf 100% Transmissionsgrad, verstanden. Die konkrete farbliche (oder grautonige) Ausführung wird in der Praxis Sicherheitsaspekte ebenso berücksichtigen wie Design-Vorgaben oder Wohlfühl-Aspekte. Die Einfärbung kann auch als Tönung bezeichnet werden.

Die seitlichen Krümmungsbereiche im Sinne der Erfindung weisen in einer Ausgestaltung der Erfindung eine relativ starke Krümmung auf, so dass sie stärker gekrümmt sind als die gemittelte Scheibenkrümmung. Die Krümmungsradien in den seitlichen Krümmungsbereichen sind also geringer als der gemittelte Krümmungsradius der gesamten Scheiben. Die Krümmungsbereiche sind insbesondere stärker gekrümmt als der zentrale Durchsichtsbereich der Scheibe. In einer vorteilhaften Ausgestaltung der Erfindung beträgt der Krümmungsradius in den erfindungsgemäß eingefärbten Krümmungsbereichen weniger als 300 mm, insbesondere weniger als 200 mm oder noch spezieller weniger als 100 mm. Hier wäre der unerwünschte Effekt von Doppelbildern und Verzerrungen ohne die erfindungsgemäße Einfärbung am ausgeprägtesten und potenziell gefährlichsten, so dass die Erfindung hier einen besonders großen Sicherheits- und Komfortgewinn erbringt. Vielfach ist ein erheblicher Vorteil in diesem Sinne auch erzielbar, wenn nur ein Teil der Krümmungsbereiche wesentlich eingefärbt ist, während ein anderer Teil hochgradig transparent belassen wird, um das Sichtfeld (insbesondere für den Fahrer) zu optimieren.

Die störenden optischen Effekte treten nicht nur bei hohen Absolutwerten der Krümmung auf, sondern auch bei starken Änderungen der Krümmung entlang einer kurzen Strecke, also bei starken Krümmungsgradienten. Auch in solchen Bereichen entfaltet die Erfindung ihre Wirkung in besonders vorteilhafter Weise. In einer weiteren Ausgestaltung der Erfindung tritt in den seitlichen Krümmungsbereichen daher ein Gradient von Krümmungsradien von mindestens 10, bevorzugt mindestens 15, besonders bevorzugt mindestens 20 auf. Der Gradient wird einheitenlos angegeben als Änderung Radius in [mm] geteilt durch Abstand auf der Scheibe in [mm].

Die seitlichen Krümmungsbereiche treten nahe oder an einer Säule oder Verstrebung der Fahrzeugkarossiere auf. Darunter wird im Sinne der Erfindung verstanden, dass die Krümmungsbereiche in der Nähe einer oder mehrerer Seitenkanten der Scheibe angeordnet sind, die in Einbaulage der betreffenden Säule oder Verstrebung zugewandt sind, und in diesem Sinne den betreffenden Seitenkanten zugeordnet sind. Die erfindungsgemäße Einfärbung kann sich direkt von der Seitenkante in Richtung Scheibenmitte erstrecken, oder auch einen Abstand zur Seitenkante aufweisen, der insbesondere durch den für Fahrzeugscheiben üblichen peripheren, opaken Abdeckdruck verdeckt ist.

In einer aus derzeitiger Sicht besonders wichtigen Ausführung ist die Fahrzeugscheibeneinheit ausgebildet als Frontscheibeneinheit (Windschutzscheibe) eines Personen-Transportmittels, wobei die eingefärbten Krümmungsbereiche solche sind, die im montierten Zustand nahe einer A-Säule liegen. Die erfindungsgemäße Einfärbung ist dabei bevorzugt außerhalb des zentralen Sichtfeld A gemäß der Regelung Nr. 43 der Wirtschaftskommission der Vereinten Nationen für Europa (UN/ECE) (ECE-R43, "Einheitliche Bedingungen für die Genehmigung der Sicherheitsverglasungswerkstoffe und ihres Einbaus in Fahrzeuge") angeordnet.

In einer weiteren Ausführung ist die Fahrzeugscheibeneinheit ausgebildet als Heckscheibeneinheit eines Personen-Transportmittels, wobei die eingefärbten Krümmungsbereiche im montierten Zustand nahe einer C-Säule liegen.

In einer noch weiteren Ausführung ist die Fahrzeugscheibeneinheit ausgebildet als Glasdacheinheit eines Personen-Transportmittels, wobei ein eingefärbter Krümmungsbereich mindestens an oder nahe einer schmalen Seitenkante der Glasdacheinheit vorgesehen ist, die im montierten Zustand an einer Einfassungs-Strebe bzw. einer Kante eines Einfassungs-Rahmens des Daches liegt.

Bei neuartigen Designlösungen der werdenden weiteren Ausführungen ist die Fahrzeugscheibeneinheit ausgebildet als Panorama-Fahrzeugscheibe eines Personen-Transportmittels (Windschutzscheibe zu Seitenscheibe / Windschutzscheibe zu Dachscheibe / Dachscheibe zu Heckscheibe / Heckscheibe zu Seitenscheibe), wobei ein eingefärbter Krümmungsbereich mindestens an oder nahe einer schmalen Seitenkante der Dachscheibe vorgesehen ist.

Es geht hierbei um Krümmungsbereiche, die im montierten Zustand nahe einer, insbesondere aufstehenden, Säule der Fahrzeugkarosserie angeordnet sind. Bei der Realisierung der Fahrzeugscheibeneinheit als Frontscheibeneinheit eines PKW handelt es sich bei den Krümmungsbereichen insbesondere um die der A-Säule der PKW-Karosserie benachbarten Bereiche, bei der Realisierung als Heckscheibeneinheit um die der C-Säule benachbarten Bereiche, und bei einer Realisierung als Glasdacheinheit um den vorderen und/oder hinteren Kantenbereich und/oder seitlichen Bereich des Glasdachs. Wenn daher in der anspruchsgemäßen Definition der Erfindung von einer "aufstehenden Säule" der Fahrzeugkarosserie die Rede ist, so gilt dies, streng genommen, nicht für die Realisierung als Glasdacheinheit. Wenn im Anspruch von einer "Fahrzeugkarosserie" die Rede ist, so ist dies im allgemeinsten Sinne als Außenhaut eines Land-, Wasser- oder Luftfahrzeuges zu verstehen, also auch als Boots- oder Flugzeughaut.

Die erfindungsgemäße Einfärbung der Krümmungsbereiche ist vorteilhafterweise derart ausgeführt, dass das geminderte Transmissionsvermögen zwischen 50 % und 75 %, insbesondere zwischen 55 % und 68 %, des Transmissionsvermögens der übrigen Scheibenfläche liegt. Bei dieser Angabe eines prozentualen Transmissionsvermögens wird eine mittlere Transmission über den Bereich des sichtbaren Lichts zu Grunde gelegt.

Es werden Färbungs- beziehungsweise Tönungsgradienten vorgesehen, wobei sich der Grad der Einfärbung ortsabhängig ändert, beispielsweise abhängig vom Abstand zur zugeordneten Seitenkante.

Erfindungsgemäß korreliert der Grad der Einfärbung mit dem Grad der Krümmung, wobei stärker gekrümmte Bereiche eine stärkere Färbung aufweisen und weniger stark gekrümmte Bereiche eine geringere Färbung. Damit kann die Gesamttransmission durch die Scheiben maximal gestaltet werden, da die Bereiche unterschiedlicher Krümmung ebensoweit eingefärbt sind, wie es zur Vermeidung von optischen Störungen erforderlich ist. Da die am stärksten gekrümmten Bereiche typischerweise nicht direkt an der Seitenkante, sondern etwas beabstandet davon angeordnet sind, ist insbesondere vorteilhafterweise vorgesehen, dass die Einfärbung zu den Rändern des oder jedes eingefärbten Bereiches hin schwächer ausgeprägt ist, derart, dass das Transmissionsvermögen zu den Rändern hin ansteigt. Ebenso kann das Transmissionsvermögen ausgehend von einem Bereich maximaler Färbung in Richtung Scheibenmitte wieder ansteigen. Mit einem solchen Verlaufen der Einfärbung wird sowohl der ästhetische Eindruck als auch die optische Wahrnehmung für die Fahrzeuginsassen verbessert, da "harte" Farb- bzw. Grauton-Kanten vermieden werden.

Die Scheibeneinheit kann aus einer einzelnen transparenten Scheibe, insbesondere Glasscheibe aufgebaut sein oder als Verbundscheibe aus mindestens zwei transparenten Scheiben, insbesondere Glasscheiben, mit zwischenliegender Polymerfolie. Zur technischen Realisierung kann einerseits vorgesehen, dass in den eingefärbten Krümmungsbereichen das Glas oder eine in ein Verbundglas eingelegte Polymerfolie eingefärbt ist. Entsprechend eingefärbte Gläser oder Polymerfolien, auch mit Verlaufscharakteristik sind auch in Serienproduktion ohne weiteres realisierbar, so dass genauere Erläuterungen dazu entbehrlich sind. Alternativ kann vorgesehen sein, dass in den eingefärbten Krümmungsbereichen das Glas oder eine in ein Verbundglas eingelegte Polymerfolie bedruckt ist. In ein Verbundglas kann auch eine eigens zur Färbung vorgesehener Folienabschnitt zusätzlich eingelegt werden.

Die Ausführung der Erfindung ist nicht auf die obengenannten Beispiele und Aspekte beschränkt, sondern ebenso in einer Vielzahl von Abwandlungen möglich, die sich im Rahmen der anhängenden Ansprüche für den Fachmann erschließen.

## Patentansprüche

1. Fahrzeugscheibeneinheit, welche seitliche Krümmungsbereiche umfasst, die im montierten Zustand nahe einer, insbesondere aufstehenden, Säule der Fahrzeugkarosserie angeordnet sind,
wobei die Krümmungsbereiche mindestens teilweise transmissionsmindernd eingefärbt sind,
wobei sich der Grad der Einfärbung ortsabhängig ändert, **dadurch gekennzeichnet, dass** der Grad der Einfärbung mit dem Grad der Krümmung korreliert.

2. Fahrzeugscheibeneinheit nach Anspruch 1, wobei die Krümmung in den seitlichen Krümmungsbereichen stärker ausgeprägt ist als die gemittelte Scheibenkrümmung.

3. Fahrzeugscheibeneinheit nach Anspruch 1 oder 2, wobei der Krümmungsradius in den seitlichen Krümmungsbereichen weniger als 300 mm, insbesondere weniger als 200 mm oder noch spezieller weniger als 100 mm beträgt.

4. Fahrzeugscheibeneinheit nach einem der Ansprüche 1 bis 3, wobei in den seitlichen Krümmungsbereichen ein Gradient von Krümmungsradien von mindestens 10 auftritt, bevorzugt mindestens 15, besonders bevorzugt mindestens 20.

5. Fahrzeugscheibeneinheit nach einem der Ansprüche 1 bis 4, ausgebildet als Frontscheibeneinheit eines Personen-Transportmittels, wobei die eingefärbten Krümmungsbereiche solche sind, die im montierten Zustand nahe einer A-Säule der PKW-Karosserie liegen.

6. Fahrzeugscheibeneinheit nach einem der Ansprüche 1 bis 4, ausgebildet als Heckscheibeneinheit eines Personen-Transportmittels, wobei die eingefärbten Krümmungsbereiche im montierten Zustand nahe einer C-Säule der PKW-Karosserie liegen.

7. Fahrzeugscheibeneinheit nach einem der Ansprüche 1 bis 4, ausgebildet als Glasdacheinheit eines Personen-Transportmittels, wobei ein eingefärbter Krümmungsbereich mindestens an oder nahe einer schmalen Seitenkante der Glasdacheinheit vorgesehen ist, die im montierten Zustand an einer Einfassungs-Strebe des PKW-Daches liegt.

8. Fahrzeugscheibeneinheit nach einem der Ansprüche 1 bis 4, ausgebildet als Panorama-Fahrzeugscheibe eines Personen-Transportmittels (Windschutzscheibe zu Seitenscheibe / Windschutzscheibe zu Dachscheibe / Dachscheibe zu Heckscheibe / Heckscheibe zu Seitenscheibe), wobei ein eingefärbter Krümmungsbereich mindestens an oder nahe einer schmalen Seitenkante der Dachscheibe vorgesehen ist.

9. Fahrzeugscheibeneinheit nach einem der Ansprüche 1 bis 8, wobei die Einfärbung der Krümmungsbereiche derart ausgeführt ist, dass das geminderte Transmissionsvermögen zwischen 50 % und 75 %, insbesondere zwischen 55 % und 68 %, des Transmissionsvermögens der übrigen Scheibenfläche liegt.

10. Fahrzeugscheibeneinheit nach einem der Ansprüche 1 bis 9, wobei sich der Grad der Einfärbung abhängig vom Abstand zur zugeordneten Seitenkante ändert.

11. Fahrzeugscheibeneinheit nach Anspruch 10, wobei die Einfärbung zu den Rändern des oder jedes eingefärbten Bereiches hin schwächer ausgeprägt ist, derart, dass das Transmissionsvermögen zu den Rändern hin ansteigt.

12. Fahrzeugscheibeneinheit nach einem der Ansprüche 1 bis 11, wobei in den eingefärbten Krümmungsbereichen das Glas selbst, eine Beschichtung auf dem Glas oder eine in ein Verbundglas eingelegte Polymerfolie eingefärbt ist.

13. Fahrzeugscheibeneinheit nach einem der Ansprüche 1 bis 12, wobei in den eingefärbten Krümmungsbereichen das Glas oder eine in ein Mehrschichten-Glas eingelegte Polymerfolie bedruckt ist.

## Claims

1. Vehicle window unit that includes side curved regions that are arranged, in the installed state, near a, in particular standing, pillar of the vehicle body,
wherein the curved regions are at least partially coloured in a transmittance reducing manner,
wherein the degree of colouration changes as a function of location, **characterised in that** the degree of colouration correlates with the degree of curvature.

2. Vehicle window unit according to claim 1, wherein the curvature in the side curved regions is more pronounced than the averaged curvature of the pane.

3. Vehicle window unit according to claim 1 or 2, wherein the radius of curvature in the side curved regions is less than 300 mm, in particular less than 200 mm, or even more specifically less than 100 mm.

4. Vehicle window unit according to one of claims 1 through 3, wherein in the side curved regions a gradient of radii of curvature of at least 10 occurs, preferably at least 15, particularly preferably at least 20.

5. Vehicle window unit according to one of claims 1 through 4, implemented as a front window unit of a passenger means of transportation, wherein the coloured curved regions are those that are positioned, in the installed state, near an A-pillar of the passenger car body.

6. Vehicle window unit according to one of claims 1 through 4, implemented as a rear window unit of a passenger means of transportation, wherein the coloured curved regions are positioned, in the installed state, near a C-pillar of the passenger car body.

7. Vehicle window unit according to one of claims 1 through 4, implemented as a glass roof unit of a passenger means of transportation, wherein a coloured curved region is provided at least at or near a narrow side edge of the glass roof unit, which is positioned, in the installed state, at a border strut of the passenger car roof.

8. Vehicle window unit according to one of claims 1 through 4, implemented as a panoramic vehicle window of a passenger means of transportation (windshield to side window / windshield to roof pane / roof pane to rear window / rear window to side window), wherein a coloured curved region is provided at least at or near a narrow side edge of the roof pane.

9. Vehicle window unit according to one of claims 1 through 8, wherein the colouration of curved regions is designed such that the reduced transmittance is between 50 % and 75 %, in particular between 55 % and 68 %, of the transmittance of the rest of the window area.

10. Vehicle window unit according to one of claims 1 through 9, wherein the degree of colouration changes as a function of the distance from the associated side edge.

11. Vehicle window unit according to claim 10, wherein the colouration is less pronounced toward the edges of the/each coloured region such that the transmittance increases toward the edges.

12. Vehicle window unit according to one of claims 1 through 11, wherein the glass itself, a coating on the glass, or a polymeric film inserted into a composite glass is coloured in the coloured curved regions.

13. Vehicle window unit according to one of claims 1 through 12, wherein the glass or a polymeric film inserted into a multilayer glass is imprinted in the coloured curved regions.

## Revendications

1. - Ensemble vitre de véhicule, lequel comporte des zones de courbure latérales qui, à l'état monté, sont disposées à proximité d'un pilier, en particulier dirigé vers le haut, de la carrosserie du véhicule,
les zones de courbure étant au moins partiellement colorées de façon à réduire la transmission,
le degré de la coloration variant en fonction de l'emplacement,
**caractérisé par le fait que** le degré de la coloration est corrélé avec le degré de la courbure.

2. - Ensemble vitre de véhicule selon la revendication 1, dans lequel la courbure dans les zones de courbure latérales est plus prononcée que la courbure moyenne de la vitre.

3. - Ensemble vitre de véhicule selon l'une des revendications 1 ou 2, dans lequel le rayon de courbure dans les zones de courbure latérales s'élève à moins de 300 mm, en particulier à moins de 200 mm ou encore plus particulièrement à moins de 100 mm.

4. - Ensemble vitre de véhicule selon l'une des revendications 1 à 3, dans lequel un gradient de rayons de courbure d'au moins 10, de préférence d'au moins 15, de façon particulièrement préférée d'au moins 20, se produit dans les zones de courbure latérales.

5. - Ensemble vitre de véhicule selon l'une des revendications 1 à 4, configuré en tant qu'ensemble vitre avant d'un moyen de transport de personnes, les zones de courbure colorées étant celles qui, à l'état monté, se trouvent à proximité d'un pilier A de la carrosserie de la voiture.

6. - Ensemble vitre de véhicule selon l'une des revendications 1 à 4, configuré en tant qu'ensemble vitre arrière d'un moyen de transport de personnes, les zones de courbure colorées, à l'état monté, se trouvant à proximité d'un pilier C de la carrosserie de la voiture.

7. - Ensemble vitre de véhicule selon l'une des revendications 1 à 4, configuré en tant qu'ensemble toit vitré d'un moyen de transport de personnes, une zone de courbure colorée étant prévue au moins à ou à proximité d'un bord latéral étroit de l'ensemble toit vitré, qui est situé, à l'état monté, à une entretoise de bordure du toit de la voiture.

8. - Ensemble vitre de véhicule selon l'une des revendications 1 à 4, configuré en tant que vitre de véhicule panoramique d'un moyen de transport de personnes (pare-brise à vitre latérale / pare-brise à vitre de toit / vitre de toit à vitre arrière / vitre arrière à vitre latérale), une zone de courbure colorée étant prévue au moins à ou à proximité d'un bord latéral étroit de la vitre de toit.

9. - Ensemble vitre de véhicule selon l'une des revendications 1 à 8, dans lequel la coloration des zones de courbure est réalisée de telle sorte que la transmittance réduite se situe entre 50 % et 75 %, en particulier entre 55 % et 68 %, de la transmittance du reste de la surface de la vitre.

10. - Ensemble vitre de véhicule selon l'une des revendications 1 à 9, dans lequel le degré de la coloration varie en fonction de la distance par rapport au bord latéral associé.

11. - Ensemble vitre de véhicule selon la revendication 10, dans lequel la coloration est moins prononcée vers les bords de la ou de chaque zone colorée de telle sorte que la transmittance augmente vers les bords.

12. - Ensemble vitre de véhicule selon l'une des revendications 1 à 11, dans lequel, dans les zones de courbure colorées, le verre lui-même, un revêtement sur le verre ou un film polymère inséré dans un verre feuilleté est coloré.

13. - Ensemble vitre de véhicule selon l'une des revendications 1 à 12, dans lequel, dans les zones de courbure colorées, le verre ou un film polymère inséré dans un verre multicouches est imprimé.
